# EUROPÄISCHE PATENTSCHRIFT

(11) **EP 0 391 048 B1**
(45) Veröffentlichungstag und Bekanntmachung des Hinweises auf die Patenterteilung: **04.08.1993**
(21) Anmeldenummer: 90103153.4
(22) Anmeldetag: 19.02.1990
(51) Int. Cl.: B65G 1/02

(54) **Stahlbaukonstruktion für ein Hochregallager**
Steelconstruction for a high-rise storage rack
Construction métallique pour rayonnage d'emmagasinage surélevé

(30) Priorität: 04.04.1989 DE 3910798; 14.10.1989 DE 3934332
(43) Veröffentlichungstag der Anmeldung: 10.10.1990
(73) Patentinhaber: Peter, Gerd, 74080 Heilbronn (DE)
(72) Erfinder: Peter, Gerd, 74080 Heilbronn (DE)
(74) Vertreter: Müller, Hans, Dipl.-Ing.

(56) Entgegenhaltungen:
- DE-A- 2 021 642
- GB-A- 818 459
- GB-A- 1 396 694

## Beschreibung

Die Erfindung betrifft eine Stahlbaukonstruktion für ein Hochregallager. In Verbindung mit vollautomatischen, rechnergestützen Regalförderzeugen dienen derartige Hochregallager zum Rationalisieren unterschiedlichster Fertigungs- und Warenverteilprozesse.

Bei den in einem Hochregal lager zum Einlagern von Paletten vorhandenen Regalen unterscheidet man zwischen Außenregalen, die längs der Außenwände vorhanden sind, so daß eine Zugriffsmöglichkeit nur von einer Seite aus besteht, und zwischen Doppelregalen, die im übrigen gesamten Innenbereich des Hochregallagers vorhanden sind und eine Zugriffsmöglichkeit von beiden Seiten aus gestatten. Im Bereich zwischen den Regalen, den sogenannten Regalgassen, sorgen in der Regel automatisch gesteuerte Regalförderzeuge für den Zu- und Abtransport des auf Paletten oder in Behältern befindlichen Materials zum bzw. vom Hochregallager.

Die Stahlbaukonstruktion für ein Hochregallager besitzt Stützen, die die gesamten vertikalen Lasten in die Fundamentkonstruktion ableiten müssen. Zwischen den Stützen sind in Längsrichtung (Regalgassen-Längsrichtung) und in Querrichtung jeweils Profile vorhanden, die die vertikalen Lasten aus den Paletten oder dem sonstigen Ladegut in die Stützen übertragen müssen. Außerdem sind die Stabilisierungskräfte für die Regal stützen, sowie alle äußeren Kräfte (Wind usw.) über Längs- und Querträger und entsprechend angeordnete Horizontalverbände in dafür vorgesehene Vertikalverbände einzuleiten. Die sich in Gassen-Längsrichtung erstreckenden Längsträger müssen damit die vertikalen Lasten aus den Paletten oder dem sonstigen Ladegut aufnehmen, zusätzlich zu ihrer Belastung aus in horizontaler Richtung wirkenden Kräften.

Damit eine bereits eingelagerte Palette bei einer falschen Einlagerung durch eine weitere Palette nicht verschoben werden kann, sind sogenannte Durchschubsicherungen vorhanden, die als Wegbegrenzer in Einschubrichtung, d. h. in Querrichtung, dienen. Durch eine im Regalförderzeug eingebaute Rutschkupplung wird die Durchschubkraft begrenzt.

Bekannt und üblich ist es, diese Stahlbaukonstruktion für ein Hochregallager aus warmgewalzten Profilen herzustellen. Für die Stützenprofile werden so beispielsweise Doppel-T-Profile, und für die Längs- und Querverbände beispielsweise ebenfalls Doppel-T-Profile oder L-Profile oder U-Profile eingesetzt. Mit derartigen Profilen läßt sich in konstruktiver Hinsicht eine einwandfreie Stahlbaukonstruktion für die gewünschten Zwecke eines Hochregallagers erstellen. Je spezifisch schwerer die verwendeten Profile sind, desto höher erweist sich regelmäßig der Herstellaufwand.

Ausgehend von diesem vorbekannten Stand der Technik liegt der Erfindung die Aufgabe zugrunde, eine Stahlbaukonstruktion der eingangs genannten Art anzugeben, mit dem der wirtschaftliche Aufwand für das Herstellen von Hochregallagern möglichst gering wird.

Diese Erfindung ist durch die Merkmale des Hauptanspruchs gegeben. Sie zeichnet sich dementsprechend bei der eingangs genannten Stahlbaukonstruktion für ein Hochregallager dadurch aus, daß zumindest für die Stützenprofile, für die Längsträger, auf denen die Paletten auflagern und für die Konsolen, mittels derer diese Längsträger an den Konsolen befestigt sind, jeweils Profile aus kaltgewalztem Stahl verwendet werden. Als besonders vorteilhaft hat sich dabei herausgestellt, das als Stützenprofil ein kaltgewalztes C-Profil und als Längsträger Z-Profile verwendet werden, wobei die beiden Flansche dieser Z-Profile horizontal ausgerichtet und querschnittsmäßig derart symmetrisch ausgebildet sind, daß ihr Schubmittelpunkt auf ihrem schrägen Steg vorhanden ist und mit ihrem Schwerpunkt zusammenfällt. Die Konsolen, an denen das jeweilige Z-Profil befestigt ist, werden auf derjenigen Stützenseite befestigt, auf der die einen vertikalen Spalt zwischen sich freilassenden beiden Profilflansche des jeweiligen Z-Profils vorhanden sind. Durch die Befestigung des Z-Profils an dieser Stützenseite, werden die durch den Spalt getrennten Flanschseiten des Stützenprofils zusammengehalten, so daß sich das Stützenprofil auch unter vertikaler Belastung nicht aufweiten kann. Diese Knotenkonstruktion ermöglicht damit überhaupt erst den Einsatz von kaltgewalzten Z-Profilen für die Längsträger. Die Konsole selber besitzt eine dem schrägen Steg des Z-Profils neigungsmäßig angepaßte Auflagerfläche, so daß der schräge Steg des Z-Profils flach auf der entsprechenden Auflagerfläche der Konsole aufruht. Im Regelfall wird das Z-Profil durch seinen Schwerpunkt hindurch, der mit dem Schubmittelpunkt zusammenfällt, an der Auflagerfläche der Konsole - beispielsweise über eine Verschraubung - befestigt. Zusätzliche Maßnahmen zur Stabilität des Längsprofils werden dadurch überflüssig. Die Konsole besitzt an ihrem oberen und unteren Ende ferner jeweils einen Abbiegungsbereich, der flach an der Stütze aufliegt und mit dem sie, wie bereits ausgeführt, an dem Stützenprofil befestigt werden kann.

Diese Knotenausbildung hat ferner den Vorteil, daß kaltgewalzte Profile ebenfalls für die Stützen verwendet werden können. Dies gilt auch für die in Querrichtung zwischen den Stützen anzuordnenden sonstigen Profile, die jeweils oberhalb oder auch unterhalb der in Längsrichtung vorhandenen Z-Profile an den Stützen befestigt werden können. Die Konsolen für die Z-Profile sind in Querrichtung genau vor der Stütze vorhanden und können dadurch das Einlagern von Paletten nicht behindern; die Paletten befinden sich jeweils seitlich zu diesen Konsolen.

Die wirtschaftlichen Vorteile, die sich durch die gegenüber warmgewalzten Profilen leichteren kaltgewalzten Profile ergeben, und die etwa zwischen 20 und 40 Prozent liegen, sind seit langem bekannt. Dies ist so beispielsweise bereits der DIN 4115, Fassung Januar 1959 zu entnehmen, wo es unter Punkt 7.3.3.1. unter anderem heißt: "Stahlleichtbauten sind Bauteile, die zwecks Stahleinsparung . . . . gegen Korrosion sorgfältiger geschützt sein müssen als gewöhnliche Stahlhochbauten." Obwohl damit die Gewichtseinsparung bei der Verwendung von kaltgewalzten Profilen zum allgemeinen Wissensstand zu zählen ist und andererseits das Streben nach Kostenreduzierung beim Erstellen von Hochregallagern ein allgemeines Bedürfnis darstellt, ist es umso erstaunlicher, daß bisher ein derartiges Hochregallager noch nicht aus kaltgewalzten Profilen hergestellt worden ist. Möglicherweise rührt das daher, daß bisher noch keine statisch einwandfreie Konstruktionsmöglichkeit für den Einsatz derartiger Profile gesehen worden ist. Die erfindungsgemäße Knotenausbildung hat darüberhinaus den großen Vorteil, daß nunmeher eine liegende Regalelemente-Vormontage problemlos möglich ist.

Als kaltgewalzte Profile sind so unter anderem sogenannte Wuppermann-Profile (jetzt Krupp-Formstahl bekannt, die einen doppelt symmetrischen Querschnitt aufweisen, so daß aus vertikaler Belastung keine Torsionsspannungen auftreten. Druckkräfte in Längsrichtung können diese Profile praktisch nicht aufnehmen; vom Hersteller dieser Profile sind derartige Beanspruchungen auch nicht zulässig. Ferner sind sogenannte Hoesch-Profile bekannt, die als kaltgewalzte Profile für Pfetten und Wandriegel entwickelt worden sind. Das beispielsweise etwa U-förmige und damit einseitig symmetrische Profil weist einen Schubmittelpunkt innerhalb des Profils auf der allerdings nicht im Schwerpunkt liegt. Dadurch werden diese Profile regelmäßig auf Torsion beansprucht, was zusätzliche konstruktive Maßnahmen erforderlich macht. Mit der erfindungsgemäßen Stahlbaukonstruktion treten diese Nachteile - wie oben ausgeführt - alle nicht auf.

Die erfindungsgemäße Stahlbaukonstruktion hat ferner den Vorteil, daß bei späterer Ladegutverkleinerung zwischen den fest eingebauten Längsträgern weitere Konsolen für zusätzliche Längsträger stufenlos, mit entsprechenden Klemmvorrichtungen, durch den Stützenspalt hindurch an der betroffenen Stütze angeklemmt werden können.

Die konstruktive Ausbildung der Z-Profile und der Konsolen ist derart, daß die freie Zugänglichkeit zum Anschrauben des Z-Profils an der Auflagerfläche der Konsole immer gegeben ist. Die vertikalen Abkantungen der oberen und unteren Flansche des Z-Profils sind im Verhältnis zur Höhe des Z-Profils daher so ausgebildet, daß diese freie Zugänglichkeit der einen oder der mehreren Schrauben zum Befestigen des Z -Profils an der Konsole vorhanden ist.

Mit der vorstehenden Knotenausbildung der erfindungsgemäßen Stahlbaukonstruktion ist es möglich, auch zur Durchschubsicherung kaltgewalzte Profile, insbesondere C-Profile zu verwenden. Im Stoßbereich zweier in X-Richtung aneinanderstoßender C-Profile, der jeweils im Bereich einer Stütze angeordnet wird, werden beide C-Profile zu einem L-Profil abgetrennt und mit diesem L-Profil-Abschnitt sich überlappend im Bereich der Stütze angeordnet. Die L-Profil-Abschnitte können dann durch eine gemeinsame Schraube an der Stütze befestigt werden. Statt der Befestigung an der Stütze können die Durchschubsicherungen aber auch an sonstigen in Querrichtung vorhandenen Profilen angeschraubt werden, wobei sie dann entweder von oben auf diesen Querprofilen aufsitzen oder von unten an diesen Querprofilen anhängend an derselben angeschraubt werden können.

Eine sinnvolle Weiterbildung für eine Stahlbaukonstruktion der eingangs genannten Art zeichnet sich ferner dadurch aus, daß in Querrichtung benachbarte Z-Profile bezüglich einer in X-Richtung verlaufenden Geraden spiegelbildlich zueinander vorhanden sind, daß ein Aussteifungsprofil in Querrichtung in, bezüglich der Längsrichtung, Feldmitte von diesen Z-Profilen, zwischen denselben vorhanden ist und daß die Stützenprofile mit ihrem vertikalen Spalt in Querrichtung in gleicher Ausrichtung hintereinanderstehend vorhanden sind. Dadurch ergeben sich Vorteile sowohl hinsichtlich der erforderlichen Stahlmenge als auch im Hinblick auf den nötig werdenden Montageaufwand.

An sich ist es möglich, die Z-Profile so stark zu dimensionieren, daß zusätzliche Stabilisierungsmaßnahmen für sie nicht erforderlich werden. Das bedeutet aber, daß die Flansche der Profile relativ stark sein müssen, damit sie die aus dem Schrägsteg herrührenden horizontalen Kräfte über Biegung aufnehmen können. Sofern diese Z-Profile von zwei in Längsrichtung nebeneinanderliegenden Stützenprofil-Reihen spiegelbildlich zueinander angeordnet werden genügt es, lediglich in ihrer Feldmitte ein Aussteifungsprofil wie beispielsweise ein U-Profil oder ein die oberen Flansche der Z-Profile miteinander verbindendes Zugglied - die insbesondere ebenfalls aus kaltgewalztem Stahl bestehen können - vorzusehen. Die Z-Profile können dann wünschenswert schlank ausgebildet werden, so daß zusammen mit der Queraussteifung der Materialeinsatz insgesamt extrem klein wird.

Diese gegenseitige spiegelbildliche Ausrichtung von Längsträgern ist an sich für U-Profile bekannt; nur sind diese U-Profile jeweils außen an den benachbarten Stützen-Reihen angeordnet. Dies bedeutet, daß aus derartigen Stützenprofilen, Längsträgern und Queraussteifungsprofilen zusammengesetzte Montageeinheiten nicht liegend auf dem Erdboden vorgefertigt werden können; im vertikalen Stoßbereich zweier solcher Montageeinheiten lassen sich die horizontal auskragenden Längsträger nicht jeweils außen an den im Stoßbereich vorhandenen Stützen vorbeiführen: Dies ist lediglich "auf dem Papier" möglich, nicht aber in der Praxis. Dazu sind die auskragenden Längsträger in horizontaler Richtung nicht steif genug. Bei der erfindungsgemäßen Stahlbaukonstruktion sind aber die horizontalen Längsprofile jeweils zur gleichen Seite hin an benachbarten Stützen montiert. Dadurch können aus Stützenprofilen, Längsund Querträgern bestehende Montageeinheiten problemlos aneinandergestellt werden; die auskragenden horizontalen Z-Profile können gleichsam seitlich an den im Stoßbereich in Längsrichtung vorhandenen ersten vertikalen Stützen der Nachbareinheit - aus horizontaler schräger Richtung - herangeführt werden.

Als weiterer Vorteil hat es sich herausgestellt, daß auch bei spiegelbildlicher Ausrichtung der Z-Profile jeweils die gleichen Konsolen verwendet werden können. Dies hat lediglich zur Folge, daß auf der einen Konsole das Z-Profil mit seinem Schrägsteg aufliegt, während auf der benachbarten Konsole das entsprechende Z-Profil mit seinem schrägen Steg anhängt. Statische Probleme ergeben sich aus dieser unterschiedlichen Befestigung der Z-Profile an den jeweiligen Konsolen aber nicht.

Weitere Ausgestaltungen und Vorteile der Erfindung ergeben sich durch die weiteren Unteransprüche und durch die nachfolgenden Ausführungsbeispiele.

Die Erfindung wird im folgenden anhand der in der Zeichnung dargestellten Ausführungsbeispiele näher beschrieben und erläutert. Es zeigen:

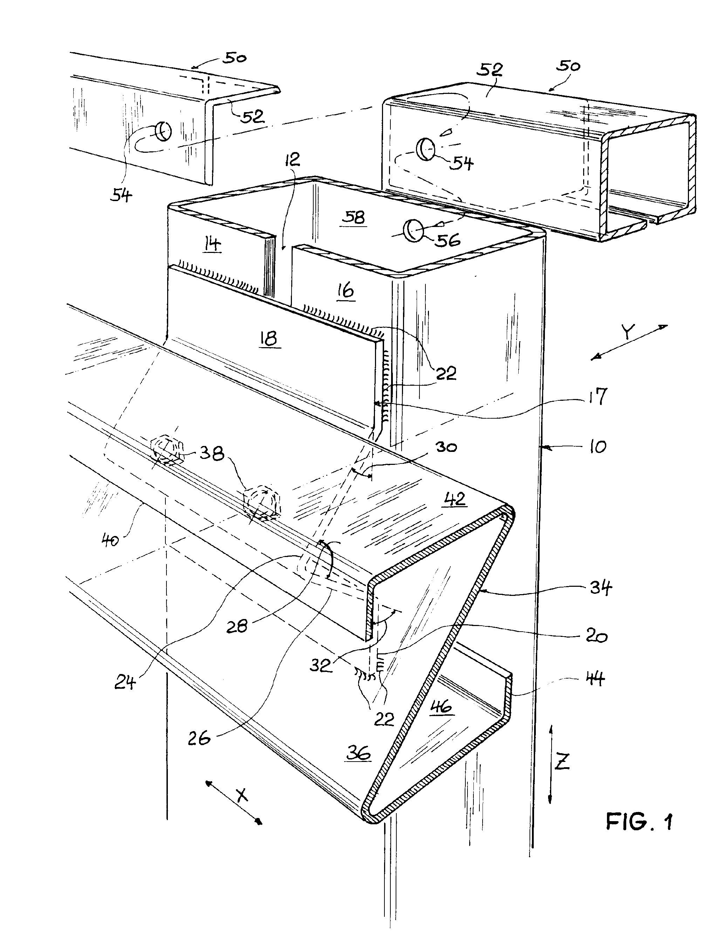

- Fig. 1: eine perspektivische Teilansicht einer als C-Profil ausgebildeten Stütze eines Hochregallagers, mit Dreieckskonsole, Längsträger und Durchschubsicherung,
- Fig. 2: eine perspektivische Teilansicht von zwei nebeneinanderliegenden, durch Aussteifungsglieder in Feldmitte ausgesteifte, an Stützen und Konsolen befestigte Längsträger nach der Erfindung.

Jede Stütze 10 eines Hochregallagers im Bereich sowohl eines Außen- als auch eines Doppelregals besitzt einen C-förmigen Querschnitt. Dadurch wird ein Rechteckquerschnitt gebildet, der einen in Stützen-Längsrichtung, d. h. in Z-Richtung, aufweisenden Spalt 12 besitzt. An der Außenseite der beidseitig durch diesen Spalt 12 vorhandenen Flansche 14, 16 der Stütze 10 ist eine Dreieckskonsole 17 angeschweißt vorhanden. Die Dreieckskonsole 17 besitzt eine obere Abbiegung 18 und eine untere Abbiegung 20, die flach auf den Flanschen 14, 16 aufliegen und an ihren umlaufenden Rändern über eine Schweißnaht 22 an den Flanschen angeschweißt sind.

Zwischen den oberen und unteren Abbiegungen 18, 20 besitzt die Konsole 17 eine im Querschnitt dreieckförmige Gestalt, wobei die obere Kathete 24 dieses Dreiecks an der oberen Abbiegung 18 und die untere Kathete 26 an der unteren Abbiegung 22 jeweils anschließen. Der Winkel 30 zwischen der oberen Kathete 24 und der Vertikalen, d. h. der Z-Richtung, beträgt 30 Grad. Die übrigen beiden Winkel, und zwar der Winkel 28 zwischen den beiden Katheten und der Winkel 32 zwischen der unteren Kathete 26 und der Z-Richtung, ergänzen sich mit dem Winkel 30 zu 180 Grad.

Auf der oberen Kathete 24 des Z-Profils 17 lagert ein Z-Profil 34 auf, das sich in Längsrichtung, d. h. in X-Richtung erstreckt. Dieser Längsträger 34 weist einen derart doppelsymmetrischen Querschnitt auf, daß sein Schubmittelpunkt mit seinem auf dem schrägen Steg 36 liegenden Schwerpunkt zusammenfällt. Im Bereich dieses Schwerpunktes ist der Steg 36 und damit der Längsträger 34 über zwei Verschraubungen 38 auf der die obere Kathete 24 bildenden Auflagerfläche der Konsole 17 befestigt. Die vertikale Abbiegung 40 des oberen Flansches 42 und die 44 des unteren Flansches 46 besitzen eine derartige (geringe) Höhe, daß die freie Zugänglichkeit der Verschraubungen 38 aus schräger Richtung, senkrecht auf die Stegfläche 36, gewährleistet ist. Dadurch kann der Längsträger 34 problemlos an der Auflagerfläche 24 angeschraubt werden. Statt der beispielsweise zwei Verschraubungen 38 können auch noch zusätzliche Verschraubungen zwischen dem Steg 36 und der Auflagerfläche 24 vorgesehen werden, was insbesondere bei sehr hohen Längsträgern der Fall sein kann.

Zur Durchschubsicherung werden ebenfalls wie bei den Stützen 10, den Konsolen 17 und den Längsträgern 34, kaltgewalzte Profile 50 verwendet. Diese Profile 50 weisen einen C-Querschnitt auf. Jeweils in X-Richtung aneinanderstoßende zwei Profile 50 sind in ihrem Stoßbereich zu einem L-Querschnitt 52 ausgestanzt. Im Bereich dieses L-Querschnittes 52 können sie ineinandergesteckt werden und in ihrem Stoßbereich, der sich im Bereich einer jeweiligen Stütze 10 befindet, über eine gemeinsame in den jeweiligen beiden L-Abschnitten 52 vorhandene Bohrung 54, sowohl miteinander als auch über in der Stütze 10 vorhandenen Bohrung 56 an derselben angeschraubt werden. Die Befestigung der Profile 50 erfolgt auf der zur Konsole 17 gegenüberliegenden Seite 58 der jeweiligen Stütze 10. In ZRichtung sind die Profile 50 etwas oberhalb des oberen Flansches 42 des Längsträgers 34 vorhanden, damit eine auf dem oberen Flansch 42 des betreffenden Längsträger 34 aufsitzende Palette in Y-Richtung durch das Profil 50 gehalten und lagemäßig in Querrichtung (Y-Richtung) begrenzt werden kann.

Statt an der Stütze 10 können Profile 50 auch an zwischen in Y-Richtung hintereinanderliegenden Stützen befestigt vorhanden Querträger werden. Die Befestigung geschieht dann in ähnlicher Weise wie an der Stütze 10. Dies ist beispielsweise bei Außenregalen sinnvoll, wo aus konstruktiven Gründen die in Y-Richtung zwischen den Stützen vorhandenen Querträger oberhalb der Längsträger vorhanden sind, während vorzugsweise bei Doppelregalen die Längsträger oberhalb dieser quer zwischen Stützen in Y-Richtung vorhandenen Profilen angeordnet sind. Dabei zeigen bei dieser Ausbildungsvariante die Z-Profile bei den Doppelregalen zur Gasse hin, während sie bei den Außenregalen von der Gasse weggerichtet sind.

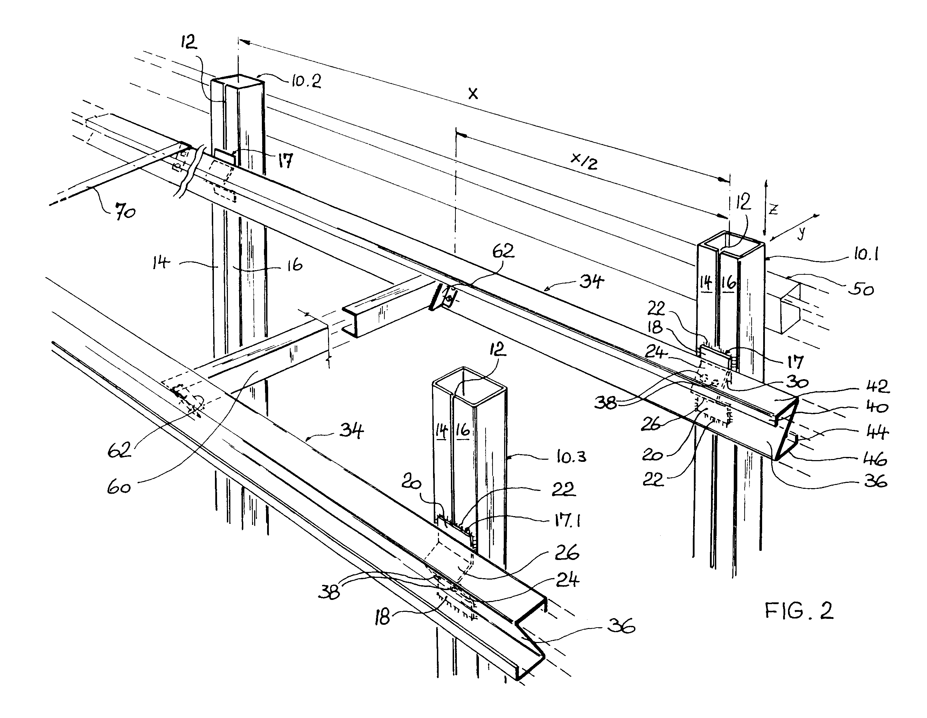

Auch bei der Ausbildung gemäß Fig. 2 besitzt jede Stütze 10.1, 10.2, 10.3 eines Hochregallagers im Bereich sowohl eines Außen- als auch eines Doppelregals einen C-förmigen Querschnitt. Dadurch wird besagter Rechteckquerschnitt gebildet, der einen in Stützen-Längsrichtung, d. h. in Z-Richtung aufweisenden Spalt 12 besitzt.

An den bezüglich einer Regalgasse hinteren Stützen 10.1, 10.2 sind an deren Außenseite die beidseitig durch einen Spalt 12 vorhandenen Flansche 14, 16 jeweils eine Dreieckskonsole 17 angeschweißt vorhanden.

Auf der oberen Kathete 24 des Z-Profils 17 lagert ein Z-Profil 34 auf, das sich in Längsrichtung, d. h. in X-Richtung erstreckt.

An der bezüglich des Z-Profils 34 gegenüberliegenden Seite ist an den Stützen 10.1, 10.2 zur Durchschubsicherung der auf den Z-Profilen 34 absetzbaren Paletten ein ebenfalls kaltgewalztes Profile 50 befestigt. Das Profil 50 weist ebenfalls wie die Stützen einen C-Querschnitt auf.

An der zu den Stützen 10.1, 10.2 in Querrichtung Y benachbarten, unmittelbar neben der Längsgasse eines Hochregallagers vorhandenen Stützenreihe, von denen eine Stütze 10.3 dargestellt ist, ist ebenfalls ein Längsträger in Gestalt des Z-Profils 34 an diesen Stützen 10.3 befestigt. Die Befestigung geschieht mittels Konsolen 17.1, die in ihren geometrischen Abmessungen den Konsolen 17 entsprechen. Nur sind die Konsolen 17.1 im Gegensatz zur Konsole 17 umgekehrt an der Stütze 10.3 angeschweißt. Bei den Konsolen 17.1 ist die untere Abbiegung 20 der Konsole 17 nunmehr oben und die bei der Konsole 17 obere Abbiegung 18 nunmehr unten an der Stütze 10.3 ebenfalls wieder über eine Schweißnaht 22 angeschweißt. Die Konsole 17.1 ist dabei ebenso wie die Konsole 17 an den durch den Spalt 12 voneinander getrennten Flanschseiten 14, 16 der Stütze 10.1 befestigt.

Aufgrund ihrer gegenüber den Stützen 10.1 und 10.2 umgekehrten Anordnung ist die bei der Stütze 17 untere Kathete 26 nunmehr eine obere Kathete. Die bei der Konsole 17 obere Kathete 24 wird bei der Konsole 17.1 zu einer unteren Kathete. An der Konsole 17.1 ist das Z-Profil 34 mit seinem schrägen Steg 36 mittels Schrauben 38 angeschraubt.

Zwischen zwei Längsprofilen 34 von zwei Stützenreihen 10.1, 10.2 bzw. 10.3 ist in einem ersten Feld in Feldmitte (X/2) eine Aussteifung beispielsweise in Form eines Aussteifungsriegels 60 vorhanden. Dieses Profil ist ein U-Profil und besteht ebenfalls aus kaltgewalztem Stahl. Das Profil 60 ist an seinen beiden stirnseitigen Enden über Winkelprofile 62 an den jeweiligen schrägen Stegen 36 der benachbarten Z-Profile 34 befestigt. Die Winkel 62 sind an dem U-Profil 60 angeschweißt, während sie ihrerseits an den Z-Profilen 34 angeschraubt sind.

In einem anderen Feld ist ebenfalls in Feldmitte ein anderes Aussteifungselement in Form eines Aussteifungsprofils 70 dargestellt. Dieses Profil 70 ist als Zugband ausgebildet und an den oberen Flanschen der beiden Z-Profile 34 befestigt. Die beiden Z-Profile 34 weisen in Feldmitte in ihren oberen Flanschen Druckspannungen auf, die den Profilquerschnitt nach außen, d. h., weg von jeweils anderen Z-Profil, auszukippen versuchen. Dieses Wegkippen wird durch das Zugband 70 verhindert. Das Zugband umgreift von oben den jeweiligen oberen Flansch des Z-Profils, an dem es befestigt werden soll, und ist an dem Stegbereich des betreffenden Z-Profils angeschraubt. Dadurch erfährt der Flansch keine Querschnittsschwächung.

Aufgrund ihrer gegenseitigen spiegelbildlichen Anordnung der beiden Z-Profile 34 reicht aus Stabilitätsgründen eine Aussteifung in ihren Feldmitten aus. Aufgrund der Anordnung der Queraussteifung in Feldmitte können die Z-Profile 34 mit ihren oberen und unteren Flanschen 42, 46 wünschenswert schlank ausgebildet werden.

## Patentansprüche

1. Stahlbaukonstruktion für ein Hochregallager, das in Längsrichtung sich erstreckende Außen- und Doppelregale zur Aufnahme von Paletten aufweist, mit
- Stützen (10), die in vertikaler Richtung (Z-Richtung) standfest auf einer Fundamentkonstruktion gegründet sind,
- Profilen (34), die in Längsrichtung (X-Richtung) und in Querrichtung (Y-Richtung) zwischen den Stützen vorhanden sind,
- Profilen zur Durchschubsicherung für die einzulagernden Paletten,
**dadurch gekennzeichnet,** daß
- das Stützenprofil (10) ein kaltgewalztes C-Profil ist,
- die Paletten auf in X-Richtung ausgerichteten kaltgewalzten Z-Profilen (34) auflagerbar sind, die jeweils seitlich an den Stützenprofilen befestigt sind und deren beide Flansche (42, 46) horizontal, d. h., in der X-Y-Ebene ausgerichtet sind, und
die querschnittsmäßig derart symmetrisch ausgebildet sind, daß ihr Schubmittelpunkt auf ihrem schrägen Steg (36) liegt ist und mit ihrem Schwerpunkt zusammenfällt,
- das Z-Profil (34) auf Konsolen (17) befestigt ist,
- diese Konsolen (17)
-- aus kaltgewalztem Stahl bestehen,
-- auf derjenigen Stützenseite angeordnet sind, auf der die einen vertikalen Spalt (12) zwischen sich freilassenden beiden Profilflansche (14, 16) des C-Profils (10) liegen,
-- jeweils eine dem schrägen Steg (36) des Z-Profils (34) neigungsmässig angepaßte Auflagerfläche (24) besitzen, wobei sich der Auflagerfläche (24) ein oberer (18) und unterer (20) Abbiegungsbereich anschließt, die beide (18, 20) flach auf dem Stützenprofil (10) aufliegend an demselben befestigt sind.

2. Stahlbaukonstruktion nach Anspruch 1,
**dadurch gekennzeichnet,** daß
das Z-Profil (34) an der Konsole (17) angeschraubt (38) ist, wobei die Verschraubung (38) durch den Steg (36) des Z-Profils und die schräge Auflagerfläche (24) der Konsole (17) hindurch geht.

3. Stahlbaukonstruktion nach Anspruch 1,
**dadurch gekennzeichnet,** daß
die Konsole (17) in ihrem oberen (18) und unteren (20) Abbiegungsbereich an dem C-Profil (10) angeschweißt (22) ist.

4. Stahlbaukonstruktion nach Anspruch 1,
**dadurch gekennzeichnet,** daß
die Konsole in ihrem oberen und unteren Abbiegungsbereich an dem C-Profil angeschraubt ist.

5. Stahlbaukonstruktion nach Anspruch 1,
**dadurch gekennzeichnet,** daß
an der Stütze, durch ihren Spalt hindurch, weitere Konsolen in Z-Richtung beliebig angeklemmt sind.

6. Stahlbaukonstruktion nach Anspruch 1,
**dadurch gekennzeichnet,** daß
zur Durchschubsicherung kaltgewalzte C-Profile (50) vorhanden sind, wobei im Stoßbereich zweier in X-Richtung aneinanderstoßender C-Profile (50) beide C-Profile zu einem L-Profil (52) abgetrennt und mit diesem L-Profil (52) sich überlappend durch zumindest eine Schraube gemeinsam im Bereich eines Stützenprofils (10) oder eines in Y-Richtung vorhandenen anderen Profils an dem betreffenden Profil angeschraubt (54, 56) sind.

7. Stahlbaukonstruktion nach Anspruch 6,
**dadurch gekennzeichnet,** daß
jeweils zwei aneinanderstoßende Druchschubsicherungen (50) bei den Doppelregalen an jeweils einer Stütze (10) durch die im Stoßbereich vorhandene zumindest eine Schraube angeschraubt sind.

8. Stahlbaukonstruktion nach Anspruch 6,
**dadurch gekennzeichnet,** daß
jeweils zwei aneinanderstoßende Durchschubsicherungen bei den Außenregalen an jeweils einem in Y-Richtung zwischen zwei Stützen vorhandenem Profil durch die im Stoßbereich zwei er Durchschubsicherungen vorhandene zumindest eine Schraube angeschraubt sind.

9. Stahlbaukonstruktion nach Anspruch 1,
**dadurch gekennzeichnet,** daß
- in Querrichtung benachbarte Z-Profile (34) bezüglich einer in X-Richtung verlaufenden Geraden spiegelbildlich zueinander angeordnet sind,
- ein Aussteifungsprofil (60, 70) in Querrichtung in, bezüglich der Längsrichtung, Feldmitte (X/2) von diesen Z-Profilen (34), zwischen denselben vorhanden ist,
- die Stützenprofile (10) mit ihrem vertikalen Spalt (12) in Querrichtung in gleicher Ausrichtung hintereinanderstehend (10.1, 10.3) angeordnet sind.

10. Stahlbaukonstruktion nach Anspruch 1,
**dadurch gekennzeichnet,** daß
das Aussteifungsprofil (60, 70) aus kaltgewalztem Stahl besteht.

11. Stahlbaukonstruktion nach Anspruch 1,
**dadurch gekennzeichnet,** daß
alle Konsolen (17, 17.1) für die durch Aussteifungsprofile (60, 70) miteinander verbundenen Z-Profile (34) gleiche geometrische Abmessungen besitzen.

12. Stahlbaukonstruktion nach Anspruch 9,
**dadurch gekennzeichnet,** daß
das Aussteifungsprofil ein Zugband (70) ist, das die oberen Flansche der beiden Z-Profile miteinander zugfest verbindet.

13. Stahlbaukonstruktion nach Anspruch 12,
**dadurch gekennzeichnet,** daß
der Endbereich des Zugbandes (70) um den oberen Flansch des Z-Profils herumgeführt und im Stegbereich dieses Z-Profils angeschraubt ist.

## Claims

1. Steel structure for high-rack storage comprising outer and double racks extending in the longitudinal direction to receive pallets, said structure comprising
- supports (10) stably erected in the vertical direction (Z-direction) on a foundation structure,
- sectional members (34) disposed in the longitudinal direction (X-direction) and in the transverse direction (Y-direction) between the supports,
- sectional members as protection against pushing-through for the pallets which are to be stored, characterised in that
- the support section (10) is a cold rolled C-section,
- the pallets can be supported on cold rolled Z-sections (34) which are fastened laterally on the support sections and whose two flanges (42, 46) are aligned horizontally, that is to say in the X-Y plane, and which have a symmetrical configuration in cross-section such that their shear centre lies on their oblique web (36) and coincides with their centre of gravity,
- the Z-section (34) is fastened on brackets (17),
- said brackets (17)
-- are made of cold rolled steel,
-- are disposed on that side of the supports on which the two section flanges (14, 16) of the C-section (10), which leave a vertical gap (12) free between them, are situated,
-- each have a support surface (24) adapted in its inclination to the oblique web (36) of the Z-section (34), said support surface (24) being followed by a top bent-over region (18) and a bottom bent-over region (20), both of which regions (18, 20) lie flat on and are fastened to the support section (10).

2. Steel structure according to Claim 1, characterised in that the Z-section (34) is bolted (38) to the bracket (17), the bolts (38) passing through the web (36) of the Z-section and the oblique support surface (24) of the bracket (17).

3. Steel structure according to Claim 1, characterised in that the bracket (17) is welded to the C-section (10) in its top and bottom bent-over regions (18, 20).

4. Steel structure according to Claim 1, characterised in that the bracket is bolted to the C-section in its top and bottom bent-over regions.

5. Steel structure according to Claim 1, characterised in that additional brackets are clamped as desired in the Z-direction to the support, through the gap in the latter.

6. Steel structure according to Claim 1, characterised in that cold rolled C-sections (50) are provided to prevent pushing-through, while in the joint region between two C-sections (50) abutting in the X-direction both C-sections are cut away to form an L-section (52), and with this L-section (52) are overlapped and conjointly bolted (54, 56) to the respective section by at least one bolt in the region of a support section (10) or of another section lying in the Y-direction.

7. Steel structure according to Claim 6, characterised in that two abutting sections (50) preventing pushing-through on the double racks are in each case bolted to a support (10) by the at least one bolt provided in the joint region.

8. Steel structure according to Claim 6, characterised in that two abutting sections preventing pushing-through on the outer racks are in each case bolted to a section provided in the Y-direction between two supports by means of the at least one bolt provided in the joint region between two sections preventing pushing-through.

9. Steel structure according to Claim 1, characterised in that
- Z-sections (34) adjoining one another in the transverse direction are disposed in mirror-image symmetry to one another in respect of a straight line extending in the X-direction,
- a stiffening section (60, 70) is disposed in the transverse direction at, relative to the longitudinal direction, midspan (X/2) of these Z-sections (34), between the latter,
- the support sections (10) are disposed with their vertical gap (12) in the transverse direction in the same alignment one behind the other (10.1, 10.3).

10. Steel structure according to Claim 1, characterised in that the stiffening section (60, 70) is made of cold rolled steel.

11. Steel structure according to Claim 1, characterised in that all the brackets (17, 17.1) for the Z-sections (34) joined together by stiffening sections (60, 70) have the same geometrical dimensions.

12. Steel structure according to Claim 9, characterised in that the stiffening section is a tie member (70) which connects together under tension the top flanges of the two Z-sections.

13. Steel structure according to Claim 12, characterised in that the end region of the tie member (70) is guided around the top flange of the Z-section and is bolted to the web region of said Z-section.

## Revendications

1. Construction en acier pour un magasin à rayonnages élevés qui présente des rayonnages extérieurs et des rayonnages doubles s'étendant dans le sens longitudinal, destinés à recevoir des palettes, construction qui comporte :
- des montants (10) qui prennent appui dans le sens vertical (sens Z), de façon fixe et stable, sur une construction d'assiette,
- des profilés (34) qui sont prévus dans le sens longitudinal (sens X) et dans le sens transversal (sens Y) entre les montants,
- des profilés de sécurité contre le glissement de part en part des palettes à emmagasiner,
caractérisée
en ce que le profilé constituant le montant (10) est un profilé en C obtenu par laminage à froid,
en ce que les palettes peuvent être déposées sur des profilés en Z (34), obtenus par laminage à froid, en affleurement dans le sens X, qui sont fixés latéralement aux profilés constituant les montants et dont les deux ailes (42, 46) sont dirigées horizontalement, c'est-à-dire dans le plan X-Y, et qui, en ce qui concerne la section transversale, se présentent sous une forme symétrique, de telle sorte que leur centre de poussée se trouve sur leur âme en oblique (36) et coïncide avec leur centre de gravité,
en ce que le profilé en Z (34) est fixé sur des consoles (17),
en ce que ces consoles (17)
- sont faites d'acier laminé à froid,
- sont disposées à la face des montants où se trouvent les deux ailes (14, 16) du profilé en C (10) laissant libre entre elles un intervalle d'ouverture vertical (12),
- présentent chacune une face d'appui (24) adaptée, en ce qui concerne l'inclinaison, à l'âme en oblique (36) du profilé en Z (34), la face d'appui (24) rejoignant une partie repliée supérieure (18) et une partie repliée inférieure (20), qui, toutes deux, sont fixées à plat sur le profilé constituant le montant (10), auquel elles s'appliquent.

2. Construction en acier suivant la revendication 1,
caractérisée
en ce que le profilé en Z (34) est fixé par vissage (en 38) à la console (17), la fixation par vissage (38) passant par l'âme (36) du profilé en Z et par la face d'appui en oblique (24) de la console (17).

3. Construction en acier suivant la revendication 1,
caractérisée
en ce que la console (17) est fixée par soudage (en 22), par sa partie repliée supérieure (18) et par sa partie repliée inférieure (20), au profilé en C (10).

4. Construction en acier suivant la revendication 1,
caractérisée
en ce que la console est fixée par vissage, par sa partie repliée supérieure et par sa partie repliée inférieure, au profilé en C.

5. Construction en acier suivant la revendication 1,
caractérisée
en ce que des consoles supplémentaires sont, à volonté, fixées par serrage, dans le sens Z, au montant, par l'intervalle d'ouverture de celui-ci.

6. Construction en acier suivant la revendication 1,
caractérisée
en ce que, pour empêcher le glissement de part en part, il est prévu des profilés en C (50), obtenus par laminage à froid, deux profilés en C (50) qui se rejoignent dans le sens X étant, dans leur zone de jonction, découpés de façon à présenter un profil en L (52) et, se chevauchant par ce profil en L (52), étant par au moins une vis, dans la zone d'un profilé constituant montant (10) ou d'un autre profilé prévu dans le sens Y, fixés ensemble par vissage (en 54, 56) au profilé en question.

7. Construction en acier suivant la revendication 6,
caractérisée
en ce que deux éléments de sécurité contre le glissement de part en part (50) qui se rejoignent sont, dans le cas des rayonnages doubles, fixés par vissage à un montant (10) par la vis, au moins, prévue dans la zone de jonction.

8. Construction en acier suivant la revendication 6,
caractérisée
en ce que deux éléments de sécurité contre le glissement de part en part qui se rejoignent sont, dans le cas des rayonnages extérieurs, fixés par vissage à un profilé prévu dans le sens Y entre deux montants par la vis, au moins, prévue dans la zone de jonction des deux éléments de sécurité contre le glissement de part en part.

9. Construction en acier suivant la revendication 1,
caractérisée
en ce que des profilés en Z (34) voisins dans le sens transversal sont disposés de façon à se présenter comme l'image énantiomorphe l'un de l'autre par rapport à une droite suivant le sens X,
en ce qu'un profilé de renforcement (60, 70) est prévu dans le sens transversal dans le champ médian (X/2), par rapport au sens longitudinal, de ces profilés en Z (34), entre ceux-ci,
en ce que les profilés constituant les montants (10), avec leur intervalle d'ouverture vertical (12), sont prévus l'un à l'arrière de l'autre (10.1, 10.3) au même niveau dans le sens transversal.

10. Construction en acier suivant la revendication 1,
caractérisée
en ce que le profilé de renforcement (60, 70) est fait d'acier laminé à froid.

11. Construction en acier suivant la revendication 1,
caractérisée
en ce que toutes les consoles (17, 17.1) prévues pour les profilés en Z (34) reliés entre eux par des profilés de renforcement (60, 70) sont de dimensions géométriques égales.

12. Construction en acier suivant la revendication 9,
caractérisée
en ce que le profilé de renforcement est une bande de traction (70) qui relie l'une à l'autre, avec résistance à la traction, les ailes supérieures des deux profilés en Z.

13. Construction en acier suivant la revendication 12,
caractérisée
en ce que la partie d'extrémité de la bande de traction (70) est guidée autour de l'aile supérieure du profilé en Z et est fixée par vissage dans la partie d'âme de ce profilé en Z.
